# EUROPEAN PATENT SPECIFICATION

(11) **EP 1 718 503 B1**
(45) Date of publication and mention of the grant of the patent: **16.12.2009**
(21) Application number: 05713653.3
(22) Date of filing: 15.02.2005
(51) Int. Cl.: B60R 21/20

(54) **VIBRATION DAMPER GASKET**
SCHWINGUNGSDÄMPFERDICHTUNG
JOINT AMORTISSEUR DE VIBRATIONS

(30) Priority: 18.02.2004 US 781368; 20.09.2004 US 945062
(43) Date of publication of application: 08.11.2006
(73) Proprietor: AUTOLIV ASP, INC., Ogden, Utah 84405 (US)
(72) Inventor: NASH, Krista, Ogden, UT 84403 (US); VISKER, Jeremy, West Haven, UT 84401 (US); WARD, Alan, North Ogden, UT 84414 (US); BUNKER, Mark, Ogden, UT 84414 (US); MORLEY, Jeff, Hooper, UT 84315 (US); RICKS, Merle, K., Layton, UT 84040 (US)
(74) Representative: Beattie, Alex Thomas Stewart
(86) International application number: PCT/US2005/004906
(87) International publication number: WO 2005/080146

(56) References cited:
- US-A1- 2002 140 210
- US-A1- 2002 140 212
- US-A1- 2003 214 119
- US-B1- 6 439 599

## Description

### BACKGROUND OF THE INVENTION

During the operation of a motor vehicle, the driver may often experience vibrations transmitted through the steering wheel of the vehicle. Such vibrations may commonly be caused by situations such as a poor road surface, improper alignment or adjustment of the vehicle tires, or other mechanical conditions. This vibrational feedback does not generally present a hazard to the driver of the vehicle. In some situations however, vibration may render steering the vehicle difficult, and lower the driver's ability to control the vehicle. In addition, vibrations received through the steering wheel may become distracting to the driver, and thus may prevent the vehicle driver from noticing other hazards on the road or from otherwise properly focusing their attention on the task of driving. Such conditions may increase the likelihood of a vehicle accident.

Modem steering wheels and steering columns are often constructed using a vibrational damper to reduce the amount of steering wheel vibration experienced by a driver. Know dampers include a mass of metal mounted within the steering column in such a way that it is allowed to oscillate or move to absorb some of the vibrations transmitted through the steering column. This mass of metal or "attenuation mass" is generally mounted to the steering column by an elastic member which allows it to move as described. When vibration is passed to the steering column, it is passed to the "attenuation mass" which operates to dampen the vibration passed through the steering wheel to the driver.

Recently, there has been a movement in the airbag module industry to utilize already existing components of the steering wheel and/or steering column as the attenuation mass for a vibration damper system. One suitable mass is the inflator of an airbag module. In order to use the inflator of an airbag module as the attenuation mass, the inflator must be mounted within the airbag module in such a way that it is permitted to vibrate or move in response to vibrations transmitted to the inflator through the steering column. When properly mounted, air bag inflators function very similarly to the attenuation mass previously used in such vibration damper systems. This also results in an overall reduction of components within a steering wheel and steering column assembly and thus may reduce the cost required for this portion of the vehicle.

Several challenges have been faced in using an airbag inflator as an attenuation mass provided to dampen vibrations in the steering column. Once such difficulty is providing a proper mounting for the inflator that will hold the inflator in place during both storage and operation of the airbag module that property allows movement of the inflator to dampen the vibrations. Several solutions to this problem have been provided, but engineers have been additionally faced by the challenge of property grounding the inflator module so as to prevent accidental, improper, or unintended activation of the inflator by the presence or buildup of electrical charges such as those provided by static electricity, lightning or other sources. Without proper grounding, such electrical sources could trigger initiation of the inflator, deploying an air bag in an unexpected potentially dangerous fashion.

Grounding has been provided by running a grounding wire from the inflator to another metal portion of the steering wheel or steering column. This solution is problematic in that because the inflator's use as a attenuation mass, it will vibrate, subjecting the wire to wear, repetitive movement, and strain that may result in breakage of the wire, damage to the inflator, or simply improper grounding. This could be dangerous for the reasons outlined above.

US 2002/0140210 (Lovell et al ) discloses a gas bag module comprising a vibration damper gasket according to the preamble of claim 1.

US 2002/0140212 (Hauer) discloses a gas bag module comprising a gas generator and elastic bearing element by means of which the gas generator is mounted so as to be neutralized with regard to vibrations in the gas bag module. The bearing element is electrically conductive and forms part of an electrical earth lead for the gas generator. The document also discloses a steering wheel comprising a gas bag module equipped with a gas generator. The gas bag module is mounted on the steering wheel so as to be neutralized with regard to vibration by means of an elastic bearing element. The elastic bearing element is electrically conductive and forms a part of an earth lead of the gas generator.

As a result, it would be a benefit in the art to provide a structure for mounting an airbag inflator in a vehicular steering wheel/steering column assembly for use as an attenuation mass that allows the inflator to vibrate in response to the steering column, while also permitting the inflator to be properly and durably grounded. Such a device, airbag modules incorporating such a device, methods of their use, and steering wheels incorporating such a device are disclosed herein.

### BRIEF SUMMARY OF THE INVENTION

The apparatus of the present invention has been developed in response to the present state of the art, and in particular, in response to the problems and needs in the art that have not yet been fully solved by currently available systems for damping vibration in steering columns. Thus, the present invention provides novel mounting structures for airbag inflators that allow the inflator to be used as a damper for vibrations transmitted through the steeling column of a vehicle.

In a first embodiment, the invention provides a vibration damper gasket for use in an inflatable airbag module mounted in the steering column of a vehicle. The vibration damper gasket of the invention includes a mounting ring sized, shaped, and configured to fit about the edge of the flange of an airbag inflator. The mounting ring has upper and lower retention arms and an adapter groove positioned between the retention arms. The adapter groove is sized to receive the edge of the airbag inflator flange. The retention arms and adapter groove are supported by a compression column provided on an outside surface of the mounting ring. The vibration damper gasket further includes an inflator ground extending along an inside surface of the mounting ring from at least an upper contact surface of the upper retention arm continuously across the adapter groove to a lower contact surface of the lower retention arm. The inflator ground serves to ground the airbag inflator within the steering column assembly.

In a first configuration, the vibration damper gasket may include a mounting ring produced as a monolithic elastomeric ring. In producing the monolithic mounting ring, the adapter groove is sized to accommodate the edge of an airbag inflator flange. In some instances, the adapter groove of the vibration damper gasket is sized to be slightly smaller than the edge of an airbag inflator flange. In others, the adapter groove of the vibration damper gasket is sized to be approximately identical in size to the edge of an inflator flange. In still others, the adapter groove of the vibration damper gasket is sized to be slightly larger in size than the edge of an inflator flange.

These various sizing schemes of the adapter groove regulate the method of attachment of the gasket to the inflator. More specifically, close conformity in size of the groove to the size of the inflator flange regulates the tightness of the fit of the flange into the groove. In some situations, the tightness and depth of the groove may be sufficient to retain the inflator within the gasket alone. In others, it may be desirable to include an adhesive to assure proper retention of the inflator within the gasket. Indeed, it may be desirable to use an adhesive even when a tight fit is provided. A conductive adhesive may be used to help assure proper grounding of the inflator.

In another configuration of the vibration damper gaskets of the invention, the gaskets include non-monolithic mounting rings and a ground. More specifically, the mounting ring is composed of a stacked set of rings, each with a specific size and purpose. The mounting ring thus includes a first elastomeric ring having a module plate .contact surface, an inflator flange support surface, and an adapter interface surface. This ring rests on the module plate and serves as a support for the mounting ring. The mounting ring next includes an elastomeric adapter ring having an interior diameter adapted to conform to the edge of the airbag inflator flange. This adapter ring is placed atop the first elastomeric ring. The mounting ring finally includes a second elastomeric ring having a contour plate contact surface, an inflator flange support surface, and an adapter interface surface. This ring is placed atop the adapter ring and is the structure that has direct contact with the contour plate of the airbag module.

In another configuration, the mounting ring of the vibration damper gaskets of the invention may take the form of a strip configured to be wrapped about the flange of the airbag inflator. The strip includes upper and lower retention arms and an adapter groove positioned between the retention arms for receiving the edge of the airbag inflator flange. The retention arms and adapter groove of the strip are supported by a compression column provided on an outside surface of the mounting ring. In use, the strip making up the mounting ring of the gasket is wrapped about an inflator and cut to size to accurately accommodate the inflator. The use of a strip allows free accommodation of the vibration damper gasket to a wide variety of inflators with varying sizes, flange sizes, flange shapes, and flange geometries.

In some instances, the ends of the strip of the vibration damper gasket produced by cutting the strip to size may be attached to each other. This may be accomplished using an adhesive, a fastener, a clamp, or other method or structure known to one of ordinary skill in the art. In some instances, it may be useful to affix the ends to each other using a conductive adhesive.

The vibration damper gaskets of the invention are intended for use with inflatable airbag modules having airbag inflators. Each of the above-described gaskets of the invention may be configured to be mounted in a vehicle primarily by compression between a contoured plate and a module plate. Each gasket of the invention described above has a support column for this purpose. More specifically, these gaskets may be constructed to have a support column having a height sufficient to provide a secure fit when the gasket is clamped between the contour and module plates. A secure fit may be provided by adapting the support column of the gasket to have a height either substantially equal to or slightly larger than the height of the space defined between the contoured plate and the module plate when they are attached together. When placed between the contoured and module plates, with the plates attached, the elastomeric nature of the gasket allows it to slightly deform, and its tendency to return to its natural shape provides the pressure needed to hold the inflator in place.

In some configurations, it may be sufficient to provide a vibration damper gasket with a support column slightly smaller than the height of the space defined between the contoured plate and the module plate when they are attached together. This may be the case when either or both of the contour and module plates are provided with surface features that protrude to engage the gasket and retain it in place.

The gasket may be supplementally attached to the contoured plate and/or the module plate using an adhesive such as a conductive adhesive. This may provide additional integrity to the mounted vibration damper gasket, and potentially aid in preventing shifting of the gasket during operation of the vehicle.

In another arrangement not covered by the claimed invention, the steering wheel-mounted vibration damper gaskets of the invention may simply be mounted between an inflator flange extending radially outward from the inflator and an airbag module mounting plate. The module mounting plate is a metal plate that is designed to attach the module to the steering wheel. More specifically the module mounting plate is a metal plate that, in tum, may be mounted to a portion of the steering wheel to secure and hold the airbag module within the steering wheel. In other embodiments, the mounting plate may comprise a portion of the steering wheel to which the airbag module may be attached.

In this arrangement, the vibration gasket may be positioned between the mounting plate and a bottom surface of the inflator flange. The vibration gasket Includes a first surface and a second surface. The first surface may be positioned above the second surface. The vibration gasket is designed such that the first surface is attachable to the inflator. In some arrangements, the first surface is attachable to the inflator via the inflator flange. The second surface is also constructed such that it may be attached to the mounting plate.

A first adhesive and a second adhesive may also be added to the vibration gasket. The first adhesive is positioned on the first surface whereas the second adhesive is positioned upon the second surface. The vibration gasket is constructed such that the first surface is attachable to the inflator via the first adhesive. More specifically, the vibration gasket is constructed such that the first surface is attachable to the inflator flange via the first adhesive. The second surface is also attachable to the mounting plate via the second adhesive.

In some arrangements, the first adhesive and the second adhesive may both be high bond adhesives. Such high bond adhesives are electrically non-conductive (i.e. they do not conduct electricity). Of course other arrangements may also be constructed in which other materials and/or devices are used as the first adhesive and/or the second adhesive.

The vibration damper gaskets of the invention include an inflator ground to assure proper grounding of the airbag inflator, thus preventing unintended deployment resulting from the buildup of an electrical charge, lightning strike, etc. The inflator ground is a conductive layer placed on exterior surfaces of the mounting gasket which may be selected from the group consisting of metal braid, metal wire, metal foil, or carbon fiber. Metals used often include copper, aluminum, and the like, and alloys of metals and/or plated metals (such as tin plated copper) may also be used.

The inflator ground travels from at least a point on an upper surface that is in contact with, or when installed will contact the contour plate, then travel across an interior face of the gasket to a bottom surface that is in contact with, or when installed, will contact the module plate of the airbag module. The ground thus appears to be a strip across a portion of the gasket. The inflator ground may be varied to have different forms, such as rings completely traversing the gasket, or the entire gasket may be ensheathed by the ground. In some instances, the vibration damper gasket may include a plurality of inflator grounds. In specific configurations, the gasket includes at least two inflator grounds.

The inflator grounds may additionally comprise an inflator interface area, which is a portion or section of the ground that is sized and configured such that it may be positioned between the first surface and the inflator. Further arrangements may also be made in which the inflator interface area is positioned between the first surface and the inflator flange.

The Inflator interface area may be positioned at a first end of the inflator ground. The inflator Interface area is designed such that it may be positioned and/or held between the first surface and the inflator flange without the use of adhesives or other attachment means. Of course, other embodiments may also be constructed in which the inflator interface area is constructed differently. For example, embodiments may be constructed in which the inflator interface area is positioned and/or held between the first surface and the inflator flange by a first electrically conductive adhesive or other attachment means.

The inflator grounds of this arrangement may also comprise a mounting plate interface area. The mounting plate interface area is a portion or section of the ground that is sized and configured such that it may be positioned between the second surface and the mounting plate. In some embodiments, the mounting plate interface area may be positioned at a second end of the inflator ground.

. The mounting plate interface area is further designed such that it may be positioned and/or held between the second surface and the mounting plate without the use of adhesives or other attachment means. Of course, other embodiments may also be constructed in which the mounting plate interface area is positioned and/or held between the second surface and the mounting plate by a second electrically conductive adhesive or other attachment means.

As noted above, the inflator grounds operate to electrically ground the inflator. Specifically, when the airbag module and the vibration gasket are attached to a steering wheel, the inflator interface area contacts the inflator and/or the inflator flange. Similarly, the mounting plate interface area contacts the mounting plate. Such contact between the inflator, the inflator grounds, and the mounting plate electrically grounds the inflator because any electrical current that is found within the inflator may flow through the grounds into the mounting plate and/or other portions of the steering wheel.

These and other features and advantages of the present invention will become more fully apparent from the following description and appended claims, or may be learned by the practice of the invention as set forth hereinafter.

### BRIEF DESCRIPTION OF THE SEVERAL VIEWS OF THE DRAWINGS

In order that the manner in which the above-recited and other features and advantages of the invention are obtained will be readily understood, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 is a cross-sectional view of an airbag module with an airbag inflator mounted within the airbag module using a vibration damper gasket of the invention such that the airbag inflator can serve as vibration dampening mass for the steering column of a vehicle into which it is installed;

Figure 2 is an isolated perspective view of the vibration damper gasket illustrated in Figure 1;

Figure 3 is a cross-sectional view of an airbag module with an airbag inflator mounted within the airbag module using a second embodiment of the vibration damper gaskets of the invention such that the airbag inflator can serve as a vibration dampening mass for the steering column of a vehicle into which it is installed;

Figure 4A is an isolated perspective view of still another vibration damper gasket of the invention; and

Figure 4B is an isolated perspective view of the vibration damper gasket of Figure 4A installed about an airbag inflator.

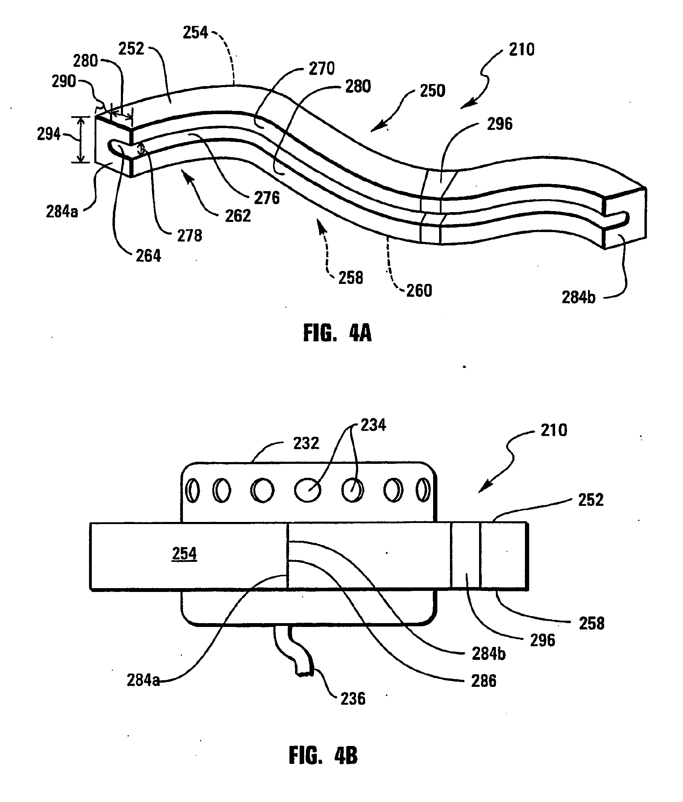

Figure 4B is an isolated perspective view of the vibration damper gasket of Figure 4A installed about an airbag inflator.

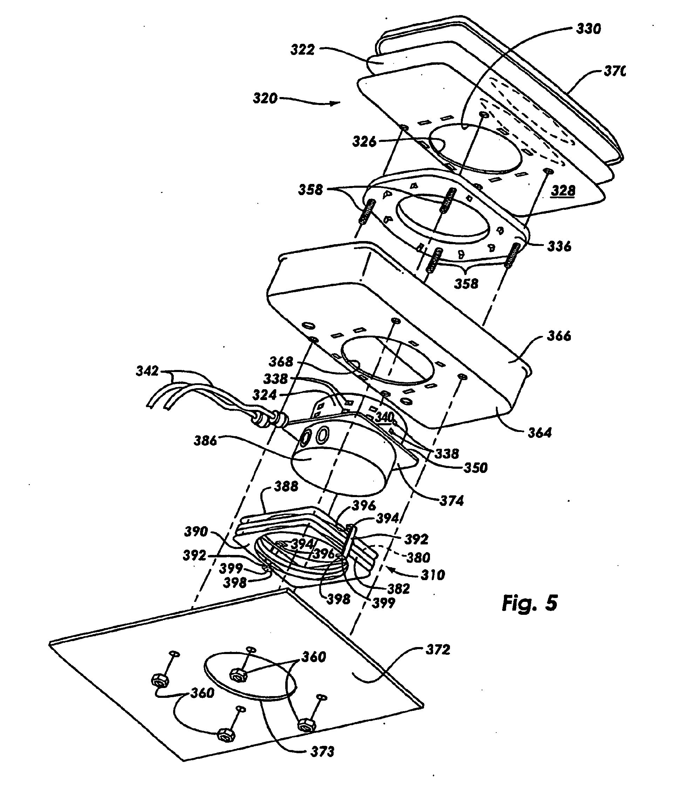

Figure 5 is an exploded view of an airbag module including an airbag and an inflator illustrating another vibration gasket not covered by the claimed invention that may be used in conjunction with an airbag module;

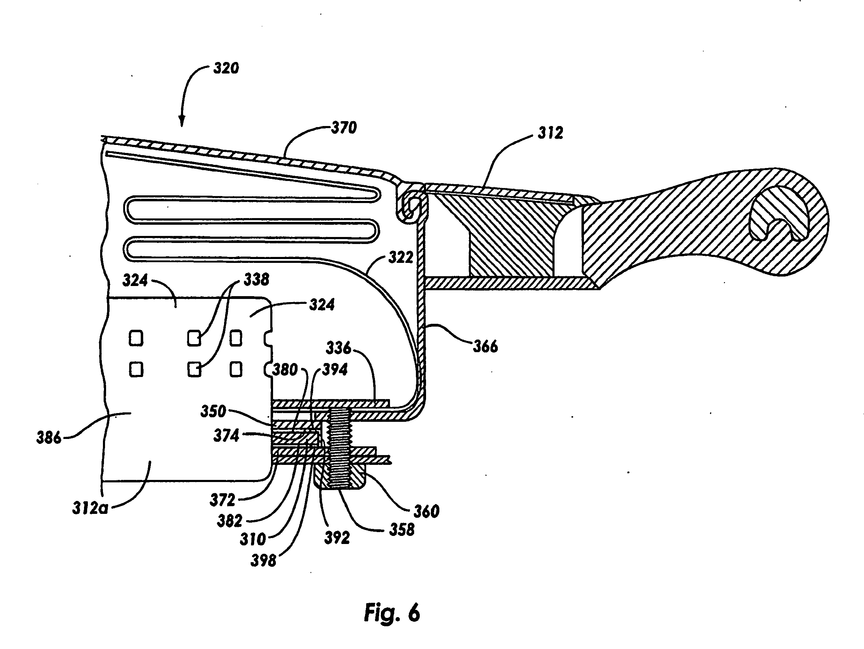

Figure 6 is a cross-sectional view that shows the vibration damper gasket and the airbag module of Figure 5 mounted onto a vehicle's steering wheel; and

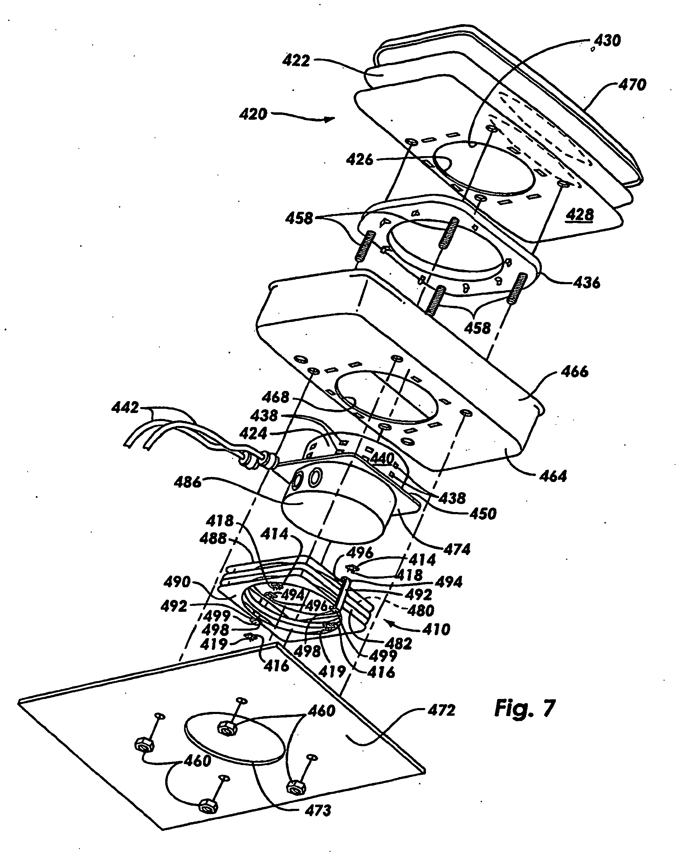

Figure 7 is an exploded view of an airbag module including an airbag and an inflator, further illustrating an additional embodiment of a vibration damper gasket according to the present invention used in conjunction with the airbag module.

### DETAILED DESCRIPTION OF THE INVENTION

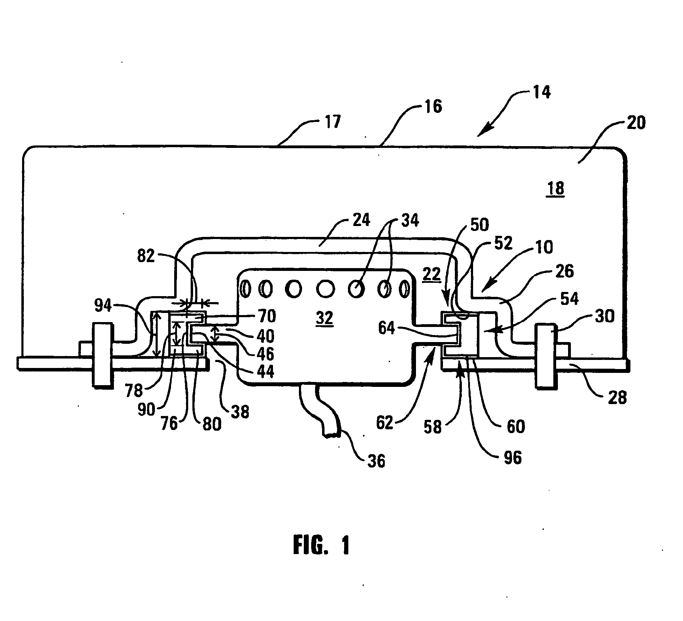

The presently preferred embodiments of the present invention will be best understood by reference to the drawings, wherein like parts are designated by like numerals throughout. It will be readily understood that the components of the present invention, as generally described and illustrated in the figures herein, could be arranged and designed in a wide variety of different configurations. Thus, the following more detailed description of the embodiments of the vibration damper gasket as represented in Figures 1 through 7, is not intended to limit the scope of the Invention, as claimed, but is merely representative of presently preferred embodiments.

Referring first to Figure 1, a cross-sectional view of an airbag module 14 is shown. In Figure 1, the airbag inflator 32 is illustrated mounted within the airbag module 14 using a vibration damper gasket 10 of the invention. The vibration damper gaskets 10 of the invention securely attach the inflator 32 to the airbag module 14 while allowing the inflator 32 to oscillate in response to transmitted forces, thus allowing the mass of the airbag inflator 32 to be used to dampen the force before it is transmitted through a steering column to a vehicle operator.

The airbag module 14 of Figure 1 generally includes an external housing 16 and a module plate 28 which cooperate to define a cavity 18. The cavity 18 is filled in part with an airbag cushion 20 configured to escape through the housing at a frangible seam or other similar structure known to one of ordinary skill in the art. In use, the airbag module 14 is positioned atop a steering column in a steering wheel of a vehicle such that the airbag cushion 20 will be deployed between the steering column and a vehicle operator.

The cavity 18 of the airbag module 14 further includes a sub-divided inflator cavity 22 separated from the primary cavity 18 by a contour plate 24. The contour plate 24 is designed to be mounted to the module plate 28 and subdivide the primary cavity 18 to enclose an airbag inflator 32. The contour plate 24 also serves to secure the airbag inflator 32 to the vehicle using the inflator gaskets 10 of the invention, as will be discussed in greater detail below.

The airbag inflator 32 is mounted within the inflator cavity 22 of the module 14 so as to allow some movement of the inflator 32 to dampen vibrational energy transmitted through the steering column. More specifically, in the modules 14 of the invention, the inflator 32 is mounted using a vibration damper gasket 10, which suspends the inflator 32 within the inflator cavity 22. The inflator cavity 22 discussed above is defined by the contour plate 24 and the module plate 28. The inflator cavity 22 generally encompasses the airbag inflator 32, which is generally suspended within the cavity 22. The contour plate 24 provides clearance above the inflator 32 to allow movement, while the module plate 28 below the inflator 32 has an orifice 38 to provide clearance below the inflator 32. The inflator orifice 38 generally accommodates protrusion of the body of the inflator 32 from the module 14, but is sufficiently narrow to prevent passage of the inflator flanges 40 through the orifice 38. Thus, the inflator cavity 22 generally provides sufficient clearance to allow movement of the inflator 32 in response to force transmitted to it through a steering column to which the module 14 has been mounted. The inflator orifice 38 is also sufficient in size to allow passage of the electrical connections 36 used to connect the inflator 32 to an accelerometer and/or other associated apparatus commonly used in the art to detect a collision event and trigger initiation of the inflator 32 and deployment of the airbag cushion 20. As described above, the orifice 38 is still small enough to prevent escape of the inflator 32 through the orifice 38.

The vibration damper gasket 10 of Figure 1 is used to mount the airbag inflator 32 to the module 14. The gasket 10 fit about a lateral radial flange 40 of the inflator 32 in such a manner that the inflator 32 may be securely supported solely by the gasket 10. Thus, the gasket 10 is generally an elastomeric ring configured to fit about an outer edge 44 of the radial flange 40 of an airbag inflator 32. As such, it may be adapted in size and shape to fit about a particular inflator 32. Use of suitable elastomeric materials in preparing the gasket 10 also provides some flexibility in accommodating a variety of flange shapes with a single gasket 10 design. In some instances, the flange 40 is generally circular in shape. In others, it is substantially parallellogrammatic in shape with rounded corners. The gaskets 10 of the invention may be varied widely to accommodate a broad spectrum of inflator 32 designs and shapes, with the size, scale, and depth of the gasket 10 being modified to provide adequate support for the airbag inflator 32 in each instance.

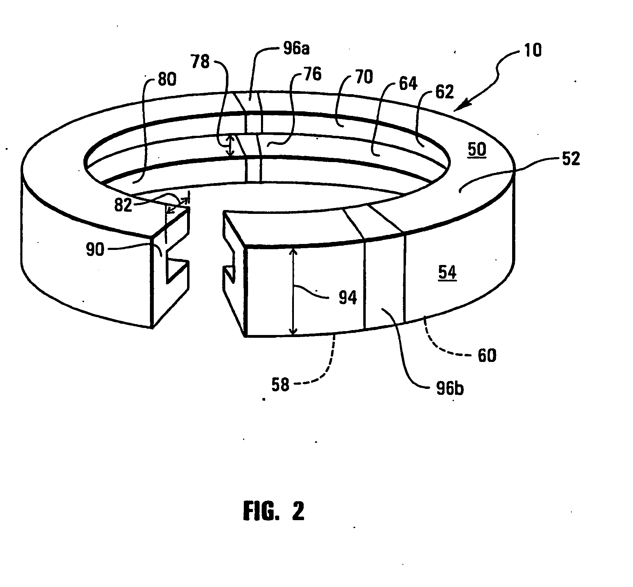

In the embodiment of the gaskets of the invention illustrated in Figures 1 and 2, the gasket 10 is a monolithic elastomeric ring. The gasket 10 generally includes upper and lower arms 70, 80, respectively, which each encompass a portion of the edge 44 of the radial inflator flange 40. The inflator flange 40 is housed in the gasket 10 within a groove 76 defined by the upper and lower arms 70, 80. The depth 82 of the groove 76 is adapted to provide arms 70, 80 sufficient to adequately support the mass of the inflator 32.

The width 78 of the groove 76 is determined so as to provide a secure fit to the airbag inflator 32. More specifically, the groove 76 may have a width 78 slightly smaller than a width 46 of the edge 44 of the inflator flange 40. The elastomeric arms 70, 80 may flex slightly and grasp the flange 40 to allow the edge 44 to penetrate sufficiently into the groove 76 to provide a secure fit. Alternatively, the groove 76 may have a width 78 equivalent to the width 46 of the edge 44 of the inflator flange 40 or slightly larger than the width 46 of the edge 44 of the inflator flange 40. In either of these cases, the depth 82 of the groove 76 may be adapted to be sufficient to allow secure retention of the inflator 32, and/or an additional adhesive may be used to secure the inflator 32 in place within the gasket 10.

The gasket 10 further includes a compression column 90 supporting the arms 70, 80 and defining an inner surface of the groove 76. In the embodiment of the gaskets 10 of the invention illustrated in Figure 1, the compression column 90 is continuous with the arms 70, 80. The compression column 90 is adapted to be placed within a portion of the inflator cavity 22 defined by a gasket adapter step 26 of the contour plate 24. More specifically, the compression column 90 has a height 94 provided to allow the contour plate 24 to engage the compression column 90 when the contour plate 94 is attached to the module plate 28. Such engagement generally occurs at a contact surface 52 of the upper surface 50 of the gasket 10, as well as at a contact surface 60 of the lower surface 58 of the gasket 10. The contour plate 24 may also optionally contact a rear surface 54 of the gasket 10, but is generally clear of the inner surface 62 of the gasket 10.

As illustrated in Figure 1, the upper contact surface 52 of the gasket is generally smaller than the lower contact surface 60 of the gasket 10. More specifically, the lower contact surface 60 is illustrated to extend from the compression column 90 along the lower arm 80 of the gasket 10, supporting the lower arm 80 from beneath. This is so because the inner diameter of the gasket 10 is adapted to conform to the diameter of the inflator orifice 38. This allows the gasket 10 to provide greater support for the inflator 32 from below the inflator 32 to support it against gravity. The inflator 32 is thus given greater ability to move upwardly against the upper arm 70 of the gasket 10.

The gasket 10 further includes an inflator ground 96 illustrated here as a continuous conductive layer applied about the outer surfaces of the gasket 10. Each of the vibration damper gaskets 10 of the invention include at least one such inflator ground 96 to assure proper grounding of the airbag inflator 32. The inflator ground 96 is a conductive layer placed on the exterior surface of the mounting gasket 10. Suitable materials used to make such a ground 96 may be selected from the group consisting of metal braid, metal wire, metal foil, or carbon fiber. Metals used often include copper, aluminum, and the like, and alloys of metals and/or plated metals (such as tin plated copper) may also be used. Suitable materials may be attached to the gasket 10 using adhesives or other suitable means known to one of ordinary skill in the art.

In the gaskets 10 of the invention, the inflator ground 96 travels from at least a point on the contact surface 52 of the upper surface 50 of the gasket 10 across the inner surface 62 and its contact surface 64, and to the lower contact surface 60 of the lower surface 58. The ground 96 may also span the rear surface 54. The ground 96 is configured such that when installed, it is at least in contact with the contour plate 24, the inflator flange 40, and the module plate 28. The ground 96 may thus appear as a strip across a portion of the gasket 10. The inflator ground 96 may be varied to have different forms, such as rings completely traversing the gasket, or the entire gasket 10 may be ensheathed by the ground 96. The number and placement of the grounds 96 may also be varied within the scope of the invention. In some instances, the vibration damper gasket 10 may include a plurality of inflator grounds 96. In specific configurations, the gasket 10 includes at least two inflator grounds 96.

Referring next to Figure 2, an isolated perspective view of the vibration damper gasket 10 illustrated in Figure 1 is shown. More specifically, the vibration damper gasket 10 is shown removed from the airbag module 14 of Figure 1. As described previously, the gasket 10 is a monolithic elastomeric structure. In this particular embodiment of the gasket 10, it is shown to be substantially circular in shape to fit about a substantially circular inflator flange. The general shape of the gasket 10 may be easily varied to accommodate a wide variety of inflator flange shapes and sizes. As described above, the gasket 10 includes an upper arm 70, a groove 76, and a lower arm 80. A support column 90 unites the upper and lower arms 70, 80 of the gasket 10. The gasket 10 has an upper surface 50, a lower surface 58, an inner surface 62, and a rear surface 54. As above, the upper surface 50 has a contact surface 52, and the lower surface 58 has a contact surface 60. The groove 76 has a width 78 and a depth 82 configured to grasp the flange of an airbag inflator. The gasket 10 further includes a pair of inflator grounds 96a, 96b viewed here as rings encircling the surfaces 50, 54, 58, 62 of the gasket 10.

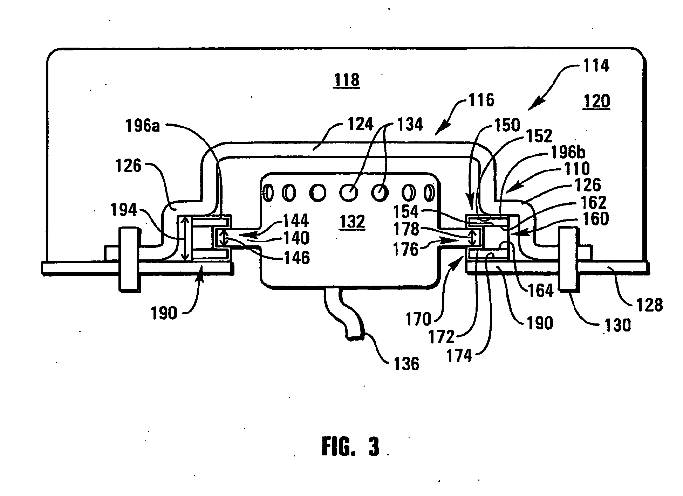

Figure 3 is a cross-sectional view of an airbag module 114 including an airbag inflator 132 mounted within the airbag module 114 using a second embodiment of the vibration damper gaskets 110 of the invention. As with the embodiment illustrated in Figures 1 and 2, the vibration damper gasket 110 allows the airbag inflator 132 to serve as a vibration dampening mass for the steering column of a vehicle into which the module 114 may be installed. In this embodiment, however, the gasket 110 is not a unitary, monolithic mass, but is instead composed of a set of components that cooperate to form the final gasket 110.

As in the airbag module 14 described in Figure 1, the airbag module 114 of Figure 3 the airbag inflator 132 is illustrated as being suspended within the airbag module 114. In Figure 3, the inflator 132 is mounted using a second embodiment of the vibration damper gasket 110 of the invention. As with the vibration damper gasket 10 of Figures 1 and 2, the vibration damper gasket 110 of the invention securely attaches the inflator 132 to the airbag module 114 while allowing the inflator 132 to oscillate in response to transmitted forces. In this way, the mass of the airbag inflator 132 is used to dampen the force before it is transmitted through a steering column to a vehicle operator. Unlike the monolithic gasket 10 of Figures 1 and 2, the gasket 110 of Figure 3 is a composite structure made up of independent, stacked rings 150, 160, 170. These rings 150, 160, 170 are combined and locked between the contour plate 124 and the module plate 128 to secure the inflator 132. These features will be discussed in greater detail below.

The airbag module 114 of Figure 3 generally includes an external, housing 116 and a module plate 128 which cooperate to define a primary module cavity 118. The cavity 118 is filled in part with an airbag cushion 120 configured to escape through the housing at a frangible seam 117 or other similar structure known to one of ordinary skill in the art. In use, the airbag module 114 is positioned atop a steering column in a steering wheel of a vehicle such that the airbag cushion 120 may deploy between the steering column and a vehicle operator to protect the vehicle operator.

The primary module cavity 118 of the airbag module 114 further includes a sub-divided inflator cavity 122 separated from the primary cavity 118 by a contour plate 124. The contour plate 124 is designed to be mounted to the module plate 128 by fasteners 130 and thus, to subdivide the primary cavity 118. This effectively encloses the airbag inflator 132 between the contour plate 124 and the module plate 128, and more specifically, the inflator orifice 138 of the module plate 128. The contour plate 124 also serves to secure the airbag inflator 132 to the vehicle using the inflator gaskets 110 of the invention.

The airbag inflator 132 is mounted within the inflator cavity 122 of the module 114 so as to allow some movement of the inflator 132 to dampen vibrational energy transmitted through the steering column. As in the gasket 10 illustrated in Figures 1 and 2, the inflator 132 of Figure 3 is mounted using a vibration damper gasket 110, which suspends the inflator 132 within the inflator cavity 122. The inflator cavity 122 discussed above is defined by the contour plate 124 and the module plate 128. The contour plate 124 provides clearance above the inflator 132 to allow movement, while the module plate 128 below the inflator 132 has an orifice 138 to provide clearance below the inflator 132. The inflator orifice 138 thus permits protrusion of the inflator 132 from the module 114. Despite this, the orifice 138 is sufficiently narrow to prevent passage of the inflator flange 140 through the orifice 138. The inflator orifice 138 is also sufficient in size to allow passage of the electrical connections 136 used to connect the inflator 132 to components of the module 114 configured to detect a collision event and trigger activation of the module 114.

As discussed above, the vibration damper gasket 110 of Figure 3 is used to mount the airbag inflator 132 to the module 114. In this instance, the gasket includes three individual rings, 150, 160, 170, more specifically, an upper ring 150, a center ring 160, and a lower ring 170. The upper ring 150 includes an upper surface 152 and a lower surface 154. The upper surface 152 of the upper ring 150 is generally adapted to serve as a contact point for the gasket 110 with the contour plate 124 when the gasket 110 is installed in the inflator module 114. The gasket 110 next includes a center ring 160 having upper and lower surfaces 162, 164. When assembled, the upper surface 162 is in contact with the lower surface 154 of the upper ring 150. The gasket 110 next includes a lower ring 170 having upper and lower surfaces 172, 174. When assembled, the upper surface 172 supports the lower surface 164 of the center ring 160; and the lower surface 174 of the lower ring 170 is in contact with the module plate 128.

The upper and lower rings 150, 170 are generally configured to have an inner circumference (or, in non-circular applications, an inner orifice) similar or equal in size or shape to that of the module plate 128. The center ring 160 has an inner diameter substantially equivalent or slightly larger than that of the inflator flange 140. In this manner, the center ring 160 is sized to fit about a lateral radial flange 140 of the inflator 132 in such a manner that the inflator 132 may be securely supported solely by the gasket 110. The fit of the flange 140 may be adapted by varying the height of the groove 176 defined by the center ring 160.
This may be done by varying the height of the center ring 178, and thus of the groove 176. In some configurations, it may be advantageous to provide a groove 176 with a width 178 slightly less than that of the inflator flange 140. Thus, when the flange 140 is inserted into the groove 140, it is grasped by the upper and lower rings 150, 170. Alternatively, the groove 176 may have a width 178 substantially equivalent to, or slightly larger than, the outer diameter/size of the flange 140. In some instances, it may be useful to provide an adhesive to assist in retaining the flange. In some instances, it may be specifically useful to use a conductive adhesive. In this gasket 110, a support column 190 having a height 194 is composed of outer portions of all three of the rings 150, 160, 170.

Thus, the gasket 110 is generally a composite elastomeric ring configured to fit about an outer edge 144 of the radial flange 140 of the airbag inflator 132. The gasket 110 of Figure 3 is uniquely adaptable in that the rings may be independently varied in size and/or shape to accommodate a wide variety of inflators 132, as well as a wide variety of airbag modules 114. Thus, the size and shape of the upper and lower rings 150, 170 may be tuned to the size and shape of the inflator orifice 138 of the module plate 128, and may be varied in thickness to assure proper compression of the gasket 110 when mounted between the contour plate 124 and the module plate 128. The rings 150, 160, 170 may further include surface features such as interlocking grooves and ridges to stabilize the rings 150, 160, 170 and to retain the rings 150, 160, 170 in their proper orientation.

Use of suitable elastomeric materials in preparing the gasket 110 also provides some flexibility in accommodating a variety of flange shapes with the gasket 110. As with the gasket 10 of Figures 1 and 2, the gasket 110 may be customized to accommodate flanges 140 that are generally circular in shape. The gasket 110 may similarly be varied to accommodate a flange 140 that is substantially parallellogrammatic in shape with rounded corners. Indeed, the gaskets 110 of the invention may be varied widely to accommodate a broad spectrum of inflator 132 designs and shapes, with the size, scale, and depth of the gasket 110 being modified to provide adequate support for the airbag inflator 132, and proper mounting of the gasket 110 between the contour plate 124 and module plate 128 in each instance.

As with the previously-discussed embodiment, the vibration damper gasket 110 is configured to house an inflator flange 140 within a groove 176 defined by the upper and lower rings 150, 170. The depth 182 of the groove 176 is adapted to provide sufficient surface area of the upper and lower rings 150, 170 to adequately support the mass of the inflator 132. The width 178 of the groove 176 is determined so as to provide a secure fit to the airbag inflator 132. More specifically, the groove 176 may have a width 178 slightly smaller than a width 146 of the edge 144 of the inflator flange 140. The elastomeric upper and lower rings 150, 170 may flex slightly and grasp the flange 140 to allow the edge 144 to penetrate sufficiently into the groove 176 to provide a secure fit. Alternatively, the groove 176 may have a width 178 equivalent to the width 146 of the edge 144 of the inflator flange 140 or slightly larger than the width 146 of the edge 144 of the inflator flange 140. In either of these cases, the depth 182 of the groove 176 may be adapted to be sufficient to allow secure retention of the inflator 132, and/or an additional adhesive may be used to secure the inflator 132 in place within the gasket 110.

As noted briefly above, the gasket 110 includes a composite compression column 190 comprising portions of the upper, center, and lower rings 150, 160, 170, and defining an inner surface of the groove 176. In the gasket 110 of the invention of Figure 3, the compression column 190 is adapted to be placed within a portion of the inflator cavity 122 defined by a gasket adapter step 126 of the contour plate 124. The compression column 190 has a height 194 provided to allow the contour plate 124 to engage the compression column 190 when the contour plate 124 is attached to the module plate 128. Such engagement generally occurs at the upper surface 152 of the upper ring 150 of the gasket 110, as well as at a lower surface 174 of the lower ring 170 of the gasket 110.

As illustrated in Figure 3, the upper surface 152 of the upper ring 150 of the gasket 110 that is in contact with the contour plate 124 is generally smaller than the lower surface 174 of the lower ring 170 of the gasket 110. More specifically, the lower contact surface 174 is illustrated to extend from the compression column 190 along the lower ring 170 of the gasket 110, supporting the gasket 110 from beneath. This is so because the inner diameter of the upper and lower rings 150, 170 of the gasket 110 are adapted to conform to the diameter of the inflator orifice 138. This allows the gasket 110 to provide greater support for the inflator 132 from below the inflator 132 to support it against gravity.

The gasket 110 also includes a pair of inflator grounds 196a, 196b illustrated here as conductive layers applied about the gasket 110. As previously discussed, the inflator grounds 196a, 196b are conductive layers, in this embodiment made as incomplete rings spanning only the upper, inner, and lower surfaces 150, 154, 158 of the gasket 110. Similarly, the materials used to make the grounds 196a, 196b may be selected from the group consisting of metal braid, metal wire, metal foil, or carbon fiber. Metals used often include copper, aluminum, and the like, and alloys of metals and/or plated metals (such as tin plated copper) may also be used. Suitable materials may be attached to the gasket 110 using adhesives or other suitable means known to one of ordinary skill in the art.

A next embodiment of the invention is illustrated in Figure 4A. More specifically, an isolated perspective view of still another vibration damper gasket 210 of the invention is shown. The gasket 210 is an elongate strip configured to be wrapped about the edge of an inflator flange as previously discussed with regard to other embodiments of the invention. The gasket 210 includes an upper surface 250 with a contact surface 252, a rear surface 254, a lower surface 258 with a contact surface 260, and an inner surface 262 with a contact surface 264. The gasket 210 further includes an upper arm 270 and a lower arm 280 which surround a groove 276.

As in prior embodiments of the gasket 210, the groove 276 is adapted to be wrapped about an edge of a lateral flange of an airbag inflator (not shown). In this embodiment of the gasket 210, the groove 276 includes a rounded inner contact surface 264 sized and adapted to fit closely about an inflator flange. As in previously discussed embodiments, the groove 276 may be sized to provide a secure fit about the inflator flange. Specifically, the groove 276 may have a depth 282 adapted to provide sufficient surface area in contact with the inflator flange to provide a secure fit. Further, the groove 276 may have a width 278 that is slightly smaller than a width of the inflator flange such that the groove 276 tightly grips the inflator flange. Alternatively, the groove 276 may have a width 278 that is substantially equivalent to the width of the inflator flange, or a width slightly larger than that of the inflator flange. In these two variants, an additional adhesive may be used.

The gasket 210 may further include a compression column 290 sized to have a height adapted to be received and secured into an inflator housing as discussed above with the previous embodiments. Also, as discussed with relation to other gaskets 210 of the invention, the gasket 210 includes an inflator ground 296. In such embodiments of the gaskets 210 of the invention which may be cut-to-size for individual uses, inflator grounds 296 may be placed at intervals (either regular or irregular) along the length of the gasket 210 such that when cut, the gasket includes at least one inflator ground 296. Use of conductive adhesive either in bonding the ends 284a, 284b of the gasket 210 or in attaching the inflator grounds 296 to the gasket 210 may further improve the grounding of the inflator in an airbag module when installed in a vehicle.

Figure 4B shows an isolated perspective view of the vibration damper gasket 210 of Figure 4A installed about an airbag inflator 232. As in the previously discussed embodiments, the gasket 210 is installed about the lateral flange of the inflator 232 in a secure fashion to allow the inflator 232 to be installed in an airbag module. In this embodiment of the gaskets 210 of the invention, the strip may be wrapped about flanges of inflators and cut to fit appropriately. This produces ends 284a, 284b which may then be joined together at a seam 286. In some instances a conductive adhesive may be used. The gasket 210 further includes at least one inflator ground 296 in contact with the inflator flange.

Referring next to Figure 5, another arrangement of a vibration damper gasket 310 is illustrated. The vibration gasket 310 is configured such that it may be mounted onto a vehicle steering wheel 312 (shown in Figure 6). The vibration gasket 310 is designed such that it is capable of dampening the vibrations and/or movements of the steering wheel 312. The vibration gasket 310 is used in conjunction with an airbag module 320 having an airbag 222 and an inflator 324. The airbag module 320 is constructed to inflate and deploy the airbag 322 in the event of a crash or accident. More specifically, the airbag module 320 is constructed such that if a crash or accident occurs, the inflator 324 will inflate and deploy the airbag 322 into a position that protects a vehicle occupant (not shown) from harmful impact with the steering wheel 312 and/or other portions of the vehicle interior (not shown).

The airbag module 320 shown in Figure 5 illustrates on example of an airbag module 320 that may be used in conjunction with the vibration gasket 310. However, those of skill in the art will recognise that other types of airbag modules may also be used with the gasket 310. Particularly, other arrangements may also be made in which one or more of the features and elements of the airbag module 320 differ from that which is depicted in Figure 5.

As shown in Figure 5, the airbag module 320 includes an airbag 322 having an inner surface 326 and an outer surface 328. The airbag 322 is capable of receiving a supply of inflation gas from the inflator 324. In order to facilitate the transfer of inflation gas from the inflator 324 to the airbag 322, the airbag may additional include a mouth 330 that fits around all or a portion of the inflator 322.

A retaining collar 336 may also be positioned proximate the inner surface 326 of the airbag 322. The collar 336 is positioned adjacent to the mouth 330. Specifically, the retaining collar 336 is secured about the inflator 322 to retain the airbag 322 in communication with the inflator 324.

The inflator 324 includes a plurality of openings 338 circumferentially spaced about an outer surface 340 of the inflator 324 through which the inflation gas is directed out of the inflator 324. The inflator 324 is a pyrotechnic assembly in which a measured quantity of generant (not shown), or pyrotechnic material, is stored within the inflator 324. The inflator 324 also includes means for activating the gas generant (not shown) which in a preferred embodiment are a pair of connector leads 342. An accelerometer (not shown) detects improper deceleration of the vehicle. Once this deceleration is detected, a signal is sent through the connector leads 342 into the inflator 324. This signal triggers a reaction within the inflator 324, which in tum, produces the inflation gas for inflating the airbag 322.

The inflator 320 includes an inflator flange 350 that extends radially outward from a portion of the inflator 324. The flange 350 may include a clamping surface (not shown) to facilitate capturing the airbag 322 between the retaining collar 336 and the flange 350. Additionally, a plurality of fasteners 358 may be attached to the retaining collar 336. As shown in Figure 5, four fasteners 358 have been added. The fasteners358 are designed such that the retaining collar 336 may hold the airbag 322 and the other parts of the airbag module 320 in their proper configuration within the mouth 330. Nuts 360 or other devices may also be secured to the fasteners 358.

The airbag module 320 may also include a mounting base member 364 to which the airbag 322 is attached. In one example, the mounting base member 364 is part of a housing 366 for retaining the inflatable airbag 322 in a folded state. The housing 366 may include an opening 368 configured to substantially match or receive the cylindrical shape of the inflator 324. In the example illustrated in Figure 5, the housing 366 is clamped, along with the mouth 330 of the airbag 322 between the retaining collar 336 and the flange member 350 of the Inflator 324. The housing 366 may also include a lid member 370 which can be secured about the housing 366 once the folded airbag 322 is folded within the housing 370. In other embodiments, the lid member 370 may be integral with the housing 366.

The retaining collar 336 is positioned adjacent the inner surface 326 of the airbag 322 at the mouth 330 and about the outer surface 340 of the inflator 324. It will be appreciated that the circular shape mouth 330 is configured to closely approximate the outer surface 340 of the inflator 324. The outer surface 340 of the inflator 324 may be configured in a variety of different configurations to provide even inflation of the airbag 322 and consequently, the corresponding configuration of the mouth 330 may also be one of a number of configurations.

The airbag module 320 may also be attached to an airbag mounting plate 372. As shown in Figure 5, this attachment is accomplished via the nuts 360 and the fastener 358. The mounting plate 372 is a metal plate that is designed to attach the module 320 to the steering wheel 312. The mounting plate 372 may also include an orifice 373 that is designed to receive a bottom portion 386 of the inflator 324.

As shown in Figure 5, the mounting plate 372 is a metal plate that, in tum, may be mounted to a portion of the steering wheel 312 to secure and hold the airbag module 320 within the steering wheel 312. In other embodiments, the mounting plate 372 may comprise a portion of the steering wheel 312 to which the airbag module 320 may be attached.

Referring still to Figure 5, the vibration gasket 310 may be positioned between the mounting plate 372 and a bottom surface 374 of the inflator flange 350. The vibration gasket 310 includes a first surface 380 and a second surface 382. The first surface 380 may be positioned above the second surface 382. The vibration gasket 310 is designed such that the first surface 380 is attachable to the inflator 324 and the second surface 382 is attachable to the mounting plate 372. As shown in Figure 5, the vibration gasket 310 is designed such that the first surface 380 is attachable to the inflator flange 350.

The vibration gasket 310 that is shown in Figure 5 is ring-shaped and is sized to encircle and/or engage the bottom portion 386 of the inflator 324. However, other embodiments may also be made in which the vibration gasket 310 does not encircle and/or engage the bottom portion 386. Still other examples may be constructed in which the shape and/or the thickness of all or a portion of the vibration gasket 310 differs from that which is shown in Figure 5. For example, other examples may be constructed in which the vibration gasket 310 is oval or elliptical in shape. Additional arrangements may be made in which the vibration gasket is shaped like a gear and/or has one or more sprockets. Yet further examples may construct be made in which the vibration gasket 310 has any other regular or irregular shape.

The vibration gasket 310 shown in Figure 5 is made from a cellular urethane material. One example of a cellular urethane material that may be used to construct the vibration gasket 310 is PORON ®, which is a product commercially available from the Rogers Corporation of Woodstock, Connecticut, U. S. A. Of course, other types of cellular urethane materials may also be used to construct the gasket 310. Yet further examples may also be constructed in which the vibration gasket 310 is made of elastomeric materials or other materials.

A first adhesive 388 and a second adhesive 390 may also be added to the vibration gasket 310. The first adhesive 388 is positioned on the first surface 380 whereas the second adhesive 390 is positioned upon the second surface 382. The vibration gasket 10 is constructed such that the first surface 380 is attachable to the inflator 324 via the first adhesive 388. More specifically, the vibration gasket 310 is constructed such that the first surface 380 is attachable to the inflator flange 350 via the first adhesive 388. The second surface 382 is also attachable to the mounting plate 372 via the second adhesive 390.

In the example shown in Figure 5, the first adhesive 388 and the second adhesive 390 are both high bond adhesives. Such high bond adhesives may be obtained from the 3M Company Corporation of St. Paul, Minnesota, USA, or a variety of other known suppliers. As will be described in greater detail below, these high bond adhesives are electrically non-conductive (i.e. they do not conduct electricity). Other examples may also be constructed in which other materials and/or devices are used as the first adhesive 388 and/or the second adhesive 390. Still further examples may be constructed in which the first adhesive and/or the second adhesive are contact adhesives.

The vibration gasket 310 includes at least one inflator ground 392 that wraps around a portion of the gasket 310. The inflator ground 392 may take the form of a foil strip or other ground as discussed above. As shown in Figure 5, two inflator grounds 392 have been added to the gasket 310. The inflator grounds 392 operate to electrically ground the inflator 324. Accordingly, the inflator grounds 392 are made of an electrically conductive metal such as copper, aluminium, and the like. Alloys of metals and/or plated metals (such as tin plated copper) may also be used to form the inflator grounds 392.

Each of the Inflator grounds 392 comprises an inflator interface area 394. The inflator interface area 394 is a portion or section of the inflator ground 392 that is sized and configured such that it may be positioned between the first surface 380 and the inflator 324. In the embodiment shown in Figure 5, the inflator interface area 394 is sized and configured such that it may be positioned between the first surface 380 and the inflator flange 350. The inflator interface area 394 is further constructed such that it may contact the inflator 324 and/or the inflator flange 350 such that an electrical current may flow from the inflator 324 into the inflator ground 392.

As illustrated in Figure 5, the inflator interface area 394 is positioned at a first end 396 of the inflator grounds 392 and is designed such that it may be positioned and/or held between the first surface 380 and the inflator flange 350 without the use of adhesives or other attachment means. Of course, other examples may also be constructed in which the inflator interface area 394 is constructed differently. For example, embodiments may be constructed in which the inflator interface area 394 interface area 394 is positioned and/or held between the first surface 380 and the inflator flange 350 by an electrically conductive adhesive or other attachment means that is capable of conducting an electrical current. Other examples may be constructed in which the Inflator interface area 394 is positioned anywhere along the longitudinal length of the inflator ground 392.

The inflator grounds 392 also comprise a mounting plate interface area 398. The mounting plate interface area 398 is a portion or section of the inflator ground 392 that is sized and configured such that it may be positioned between the second surface 382 and the mounting plate 372. The mounting plate interface area 398 is further constructed such that it may contact the mounting plate 372 such that an electrical current may flow from the Inflator ground 392 and into the mounting plate 372.

As illustrated in Figure 5, the mounting plate interface area 398 is positioned at a second end 399 of the inflator ground 392. The mounting plate interface area 398 is further designed such that it may be positioned and/or held between the second surface 382 and the mounting plate 372 without the use of adhesives or other attachment means. Of course, other examples may also be constructed in which the mounting plate interface area 398 is positioned and/or held between the second surface 382 and the mounting plate 372 by an electrically conductive adhesive or other attachment means that is capable of conducting an electrical current. Other examples may be constructed in which the mounting plate 372 interface area 398 is positioned anywhere along the longitudinal length of the ground 392.

Figure 6 is a partial cross-sectional view of the airbag module 320 and the vibration gasket 310 of Figure 5 mounted onto a vehicle steering wheel 312. As shown in Figure 6, such mounting may be done by attaching the mounting plate 372 to a portion of the steering wheel frame 312a using fasteners 358. Those of skill in the art will recognize that other methods for mounting the airbag module 320 and the vibration gasket 310 may also be used. For example, examples may be constructed in which the fasteners 358 are not used to attach the mounting plate 372 to the steering wheel frame 312a, but instead, one or more additional fasteners and/or additional attachment means are used to connect the mounting plate 372 to the frame 312a. Further examples may be constructed in which the mounting plate 372 comprises a portion of the steering wheel frame 312a.

As depicted in Figure 6, the vibration gasket 310 may be designed such that when the vibration gasket 310 and the airbag module 320 are positioned onto the steering wheel 312, the vibration gasket 310 encircles and/or engages a bottom portion 386 of the inflator 324. Accordingly, when the steering wheel 312 experiences a vibration and/or movement, the inflator 324 and the gasket 310 will resist movement and will dampen the overall vibration/movement of the steering wheel 312. Further embodiments may also be made in which the size, shape and/or configuration of the vibration gasket310 is modified in order to adjust and/or optimize the ability of the vibration gasket 310 to dampen the vibration/movement of a particular type of steering wheel 312.

The manner by which the vibration gasket 310 operates to electrically ground the inflator 324 is also illustrated in Figure 6. Specifically, when the airbag module 320 and the vibration gasket 310 are attached to a steering wheel 312, the inflator interface areas 394 contact the inflator 324 and/or the inflator flange 350 whereas the mounting plate Interface areas 398 contact the mounting plate 372. Such contact between the inflator 324, the inflator grounds 392, and the mounting plate 372 electrically grounds the inflator 324 because any electrical current that is found within the inflator 324 may flow through the inflator grounds 392 into the mounting plate 372 and/or other portions of the steering wheel 312.

Referring now to Figure 7, an exploded view of an additional example of the present invention is depicted. Figure 7 shows a vibration gasket 410 that is used in conjunction with the airbag module 420. Like the embodiment described above, the vibration gasket 410 may be positioned onto a steering wheel 412 (shown in Figure 6) and used to dampen vibrations and/or movement of the steering wheel 412.

The vibration gasket 410 may include all of the features and elements that are found on the vibration gasket 310 that is described above. The difference between the vibration gasket 410 shown in Figure 7 and the vibration gasket 310 described above is that the vibration gasket 410 additionally comprises a first electrically conductive adhesive 414 and a second electrically conductive adhesive 416. The first electrically conductive adhesive 414 is positioned on the inflator interface area 494 and the second electrically conductive adhesive 416 is positioned on the mounting plate interface area 498.

In the example shown in Figure 7, the first electrically conductive adhesive 414 operates to bond and/or attach the inflator interface area 494 to the inflator 424 and/or the inflator flange 450. Likewise, the second electrically conductive adhesive 416 operates to bond and/or attach the mounting plate interface area 494 to the mounting plate 472. Of course, other examples may be constructed in which the mechanism and/or methods for attaching the inflator interface area 494 to the inflator 424 and/or the inflator flange 450 differ from that which is shown in Figure 7. Similarly, further examples may be constructed in which the mechanism and/or methods for attaching the mounting plate interface area 494 to the mounting plate 472 differ from that which is shown in Figure 7.

As shown In Figure 7, the first electrically conductive adhesive 414 and second electrically conductive adhesive 416 are both contact adhesives. The first electrically conductive adhesive 414 and the second electrically conductive adhesive 416 are also both constructed such that they are capable of conducting and/or transmitting an electrical current. In the embodiment shown in Figure 7, this is accomplished by having the first electrically conductive adhesive 414 include one or more first conductive fibers 418 and by having the second electrically conductive adhesive 416 include one or more second conductive fibers 419. As is known in the art, the fibers 418. 419 are constructed of metal and the like and allow current to flow through the adhesives 414,416 bypassing through the fibers 418,419.

Referring still to Figure 7, the vibration gasket 410 is constructed such that when the airbag module 420 and the vibration gasket 410 are attached to a steering wheel 312 (shown in Figure 6), the vibration gasket 410 will encircle and/or engage a bottom portion 486 of the inflator flange 450. At the same time, the vibration gasket 410 will be bonded to the inflator 424 and the mounting plate 472. Specifically, the inflator interface 494 will be bonded to the inflator 424 and/or the inflator flange 450 via the first electrically conductive adhesive 414 whereas the mounting plate interface area 498 will bonded to the mounting plate 472 via the second electrically conductive adhesive 416.

The manner in which the vibration gasket 410 operates to electrically ground the inflator 424 will now be described. If an electrical current enters or is found in the inflator 424, the current can flow out of the inflator 424 by passing through the conductive fibers 418 found in the first electrically conductive adhesive 414. Once the current flows through the fibers 418, the current may then flow through the inflator grounds 492. After the current reaches the end of the inflator grounds 492, the current may then flow through the second conductive fibers 419 and into the mounting plate 472, the steering wheel frame 312a (shown in Figure 6), and/or other portions of the steering wheel 312. In turn, such flow of current along this flow path ensures that the electrical current is not held within the inflator 424 and operates to electrically ground the inflator 424.

Referring now to Figures 5 through 7 generally, the arrangements are shown which also provide for a novel method of dampening the vibrations and/or movements of a vehicle steering wheel 312. The method involves obtaining at least one vibration gasket 310,410 as described above. Once the gasket 310, 410 is obtained, the gasket 310,410 is installed onto the steering wheel 312. In some examples, this installing step is accomplished by positioning the gasket 310,410 such that the gasket 310,410 encircles and/or engages a bottom portion 486 of an airbag inflator 424.

The method may additionally comprise the step of tuning the gasket 310,410 to provide optimal dampening of the vibrations and/or movements of the steering wheel 312. In some examples, such tuning of the gasket 310,410 may involve adjusting the size and/or shape of the gasket 310,410. Of course other methods of tuning the gasket 310,410 may also be used. Still further examples may involve testing the gasket 310,410 to determined what size, shape, and/or configuration of the gasket 310.410 provides optimal dampening of the vibrations and/or movements of the steering wheel 312.

In summary, the present invention provides novel vibration gaskets that may be used to dampen the vibrations and/or movement of a steering wheel while providing proper grounding to the components of an airbag module. As such, many of the limitations associated with known vibration gaskets are effectively eliminated.

The present invention may be embodied in other specific forms without departing from its structures, methods, or other essential characteristics as broadly described herein and claimed hereinafter. The described embodiments are to be considered in all respects only as illustrative. and not restrictive. The scope of the invention is, therefore, indicated by the appended claims. rather than by the foregoing description. All changes that come within the meaning and range of equivalency of the claims are to be embraced within their scope.

## Claims

1. A vibration damper gasket (10,110,210) for an inflatable airbag module (14,114) comprising: a mounting ring (10,110,210) configured to fit about the edge of an airbag inflator flange (40,140). the ring (10,110,210) having upper and lower retention arms (70,80;150,170:270,280) and an adapter groove (78,178,278) positioned between the retention arms (70,80:150,170;270,280) for receiving the edge of the airbag inflator flange (40,140), the retention arms (70,80;150,170;270,280) and adapter groove (76,178,276) being supported by a compression column (90,190,210) provided on an outside surface of tha mounting ring (10;110,210); **characterised in that**
an inflator ground (98,196a,198b,298) extends along an inside surface of the mounting ring (10,110,210) from at least an upper contact surface (52,152,252) of the upper retention arm (70,150,270) continuously across the adapter groove (76,176,216) to a lower contact surface (60,174,260) of the lower retention arm (80;170,280) the inflator ground (96,198a,196b,296) serving to ground the airbag inflator (32,132,232).

2. The vibration damper gasket (10,110,210) of claim 1, wherein the mounting ring (10,110,210) is a monolithic elastomeric ring in which the adapter groove (76,176,276) is sized to accommodate the edge of an airbag inflator flange (40,140).

3. The vibration damper gasket (10,110,210) of claim 2, wherein the adapter groove (76,176,276) is sized to be slightly smaller than the edge of an airbag inflator flange (40,140).

4. The vibration damper gasket (110) of claim 1, wherein the mounting ring (110) includes:
a first elastomeric ring (170) having a module plate contact surface (174), an inflator flange support surface (172), and an adapter interface surface;
an elastomeric adapter ring (160) having an interior diameter adapted to conform to the edge of the airbag inflator flange (140); and
a second elastomeric ring (150) having a contour plate contact surface (152), an inflator flange support surface (154), and an adapter interface surface.

5. The vibration damper gasket (210) of claim 1. wherein the mounting ring (210) includes:
a strip configured to be wrapped about the airbag inflator (232), the strip including upper and lower retention arms (270,280) and an adapter groove (276) positioned between the retention arms (270,280) for receiving the edge of the airbag inflator flange, the retention arms (270,280) and adapter groove (276) being supported by the compression column (290), wherein the gasket (210) may be wrapped about an inflator (232) and cut to size to accurately accommodate various inflators.

6. The vibration damper gasket (10,110,210) of any preceding claim, wherein the Inflator ground (96, 196a, 196b, 296) is an externally-placed conductive layer selected from the group consisting of metal braid, metal wire, metal foil, or carbon fiber.

7. An airbag module comprising a vibration damper gasket according to any preceding claim, wherein the mounting ring (10,110) is held in place within the airbag module (14,114) by compression between an inflator contour plate (24,124) and an airbag module plate (28,128).

## Patentansprüche

1. Schwingungsdämpfer-Dichtung (10, 110, 210) für ein aufblasbares Airbag-Modul (14, 114), umfassend: einen Montagering (10, 110, 210), der dafür ausgelegt ist, um den Rand eines Flanschs einer Airbag-Aufblaseinrichtung (40, 140) zu passen, wobei der Ring (10, 110, 210) obere und untere Haltearme (70, 80; 150, 170; 270, 280) und eine Adapternut (76, 176, 276), die zwischen den Haltearmen (70, 80; 150, 170; 270, 280) angeordnet ist, aufweist, um den Rand des Flanschs der Airbag-Aufblaseinrichtung (40, 140) aufzunehmen, wobei die Haltearme (70, 80; 150, 170; 270, 280) und die Adapternut (76, 176, 276) durch eine Kompressionssäule (90, 190, 290) gehalten werden, die an einer Außenfläche des Montagerings (10, 110, 210) bereitgestellt wird;
**dadurch gekennzeichnet, dass**
sich eine Erde der Aufblaseinrichtung (96, 196a, 196b, 296) entlang einer Innenfläche des Montagerings (10, 110, 210) von mindestens einer oberen Kontaktfläche (52, 152, 252) des oberen Haltearms (70, 150, 270) ununterbrochen über die Adapternut (76, 176, 276) bis zu einer unteren Kontaktfläche (60, 174, 260) des unteren Haltearms (80; 170, 280) erstreckt, wobei die Erde der Aufblaseinrichtung (96, 196a, 196b, 296) dazu dient, die Airbag-Aufblaseinrichtung (32, 132, 232) zu erden.

2. Schwingungsdämpfer-Dichtung (10, 110, 210) nach Anspruch 1, wobei der Montagering (10, 110, 210) ein monolithischer Elastomerring ist, in dem die Adapternut (76, 176, 276) derart bemessen ist, dass sie den Rand eines Flanschs der Airbag-Aufblaseinrichtung (40, 140) aufnehmen kann.

3. Schwingungsdämpfer-Dichtung (10, 110, 210) nach Anspruch 2, wobei die Adapternut (76, 176, 276) geringfügig kleiner bemessen ist als der Rand eines Flanschs der Airbag-Aufblaseinrichtung (40, 140).

4. Schwingungsdämpfer-Dichtung (110) nach Anspruch 1, wobei der Montagering (110) umfasst:
einen ersten Elastomerring (170) mit einer Modulplatten-Kontaktfläche (174), einer Haltefläche für den Flansch der Aufblaseinrichtung (172) und einer Adapterkontaktfläche;
einen Elastomer-Adapterring (160) mit einem Innendurchmesser, der dafür ausgelegt ist, dem Rand des Flanschs der Airbag-Aufblaseinrichtung (140) zu entsprechen; und
einen zweiten Elastomerring (150) mit einer Konturplatten-Kontaktfläche (152), einer Haltefläche für den Flansch der Aufblaseinrichtung (154) und einer Adapterkontaktfläche.

5. Schwingungsdämpfer-Dichtung (210) nach Anspruch 1, wobei der Montagering (210) umfasst:
einen Streifen, der dafür ausgelegt ist, um die Airbag-Aufblaseinrichtung (232) herumgewickelt zu werden, wobei der Streifen obere und untere Haltearme (270, 280) und eine Adapternut (276), die zwischen den Haltearmen (270, 280) angeordnet ist, aufweist, um den Rand des Flanschs der Airbag-Aufblaseinrichtung aufzunehmen, wobei die Haltearme (270, 280) und die Adapternut (276) durch die Kompressionssäule (290) gehalten werden, wobei die Dichtung (210) um eine Aufblaseinrichtung (232) herumgewickelt und auf Größe geschnitten werden kann, um für verschiedene Aufblaseinrichtungen eingesetzt werden zu können.

6. Schwingungsdämpfer-Dichtung (10, 110, 210) nach einem der vorstehenden Ansprüche, wobei die Erde der Aufblaseinrichtung (96, 196a, 196b, 296) eine äußerlich angeordnete leitfähige Schicht ist, die aus der Gruppe bestehend aus Metallgeflecht, Metalldraht, Metallfolie oder Kohlefaser ausgewählt ist.

7. Airbag-Modul, umfassend eine Schwingungsdämpfer-Dichtung nach einem der vorstehenden Ansprüche, wobei der Montagering (10, 110) in dem Airbag-Modul (14, 114) durch Kompression zwischen einer Konturplatte der Aufblaseinrichtung (24, 124) und einer Airbag-Modulplatte (28, 128) gehalten wird.

## Revendications

1. Une garniture d'amortisseur de vibrations (10, 110, 210) pour un module d'airbag gonflable (14, 114) comportant : un anneau de montage (10, 110, 210) configuré pour aller autour du bord d'un rebord de gonfleur d'airbag (40, 140), l'anneau (10, 110, 210) ayant des bras de retenue supérieur et inférieur (70, 80 ; 150, 170 ; 270, 280) et une rainure adaptatrice (76, 176, 276) positionnée entre les bras de retenue (70, 80 ; 150, 170 ; 270, 280) pour recevoir le bord du rebord de gonfleur d'airbag (40, 140), les bras de retenue (70, 80 ; 150, 170 ; 270, 280) et la rainure adaptatrice (76, 176, 276) étant soutenus par une colonne de compression (90, 190, 290) fournie sur une surface extérieure de l'anneau de montage (10, 110, 210) ; **caractérisé en ce que**
une masse de gonfleur (96, 196a, 196b, 296) s'étend le long d'une surface intérieure de l'anneau de montage (10, 110, 210) depuis au moins une surface de contact supérieure (52, 152, 252) du bras de retenue supérieur (70, 150, 270) de façon continue d'un bout à l'autre de la rainure adaptatrice (76, 176, 276) jusqu'à une surface de contact inférieure (60, 174, 260) du bras de retenue inférieur (80 ; 170, 280) la masse de gonfleur (96, 196a, 196b, 296) servant à mettre à la masse le gonfleur d'airbag (32, 132, 232).

2. La garniture d'amortisseur de vibrations (10, 110, 210) de la revendication 1, où l'anneau de montage (10, 110, 210) est un anneau élastomère monolithique dans lequel la rainure adaptatrice (76, 176, 276) est calibrée pour loger le bord d'un rebord de gonfleur d'airbag (40, 140).

3. La garniture d'amortisseur de vibrations (10, 110, 210) de la revendication 2, où la rainure adaptatrice (76, 176, 276) est calibrée pour être légèrement plus petite que le bord d'un rebord de gonfleur d'airbag (40, 140).

4. La garniture d'amortisseur de vibrations (110) de la revendication 1, où l'anneau de montage (110) comprend :
un premier anneau élastomère (170) ayant une surface de contact de plaque de module (174), une surface de soutien de rebord de gonfleur (172), et une surface d'interface adaptatrice ;
un anneau adaptateur élastomère (160) ayant un diamètre intérieur adapté pour se conformer au bord du rebord de gonfleur d'airbag (140) ; et
un deuxième anneau élastomère (150) ayant une surface de contact de plaque de contour (152), une surface de soutien de rebord de gonfleur (154), et une surface d'interface adaptatrice.

5. La garniture d'amortisseur de vibrations (210) de la revendication 1, où l'anneau de montage (210) comprend :
une bande configurée pour être enroulée autour du gonfleur d'airbag (232), la bande comprenant des bras de retenue supérieur et inférieur (270, 280) et une rainure adaptatrice (276) positionnée entre les bras de retenue (270, 280) pour recevoir le bord du rebord de gonfleur d'airbag, les bras de retenue (270, 280) et la rainure adaptatrice (276) étant soutenus par la colonne de compression (290), où la garniture (210) peut être enroulée autour d'un gonfleur (232) et découpée et calibrée pour loger de façon précise divers gonfleurs.

6. La garniture d'amortisseur de vibrations (10, 110, 210) de n'importe quelle revendication précédente, où la masse de gonfleur (96, 196a, 196b, 296) est une couche conductrice placée de façon externe sélectionnée dans le groupe constitué de tresse métallique, fil métallique, ruban métallique, ou fibre de carbone.

7. Un module d'airbag comportant une garniture d'amortisseur de vibrations selon n'importe quelle revendication précédente, où l'anneau de montage (10, 110) est tenu en place à l'intérieur du module d'airbag (14, 114) par compression entre une plaque de contour de gonfleur (24, 124) et une plaque de module d'airbag (28, 128).
